# EUROPÄISCHE PATENTANMELDUNG

(11) **EP 2 993 749 A1**
(43) Veröffentlichungstag der Anmeldung: **09.03.2016**
(21) Anmeldenummer: 14306368.3
(22) Anmeldetag: 05.09.2014
(51) Int. Cl.: H02G 3/04, B60R 16/02

(54) **ANORDNUNG ZUR ELEKTRISCHEN VERBINDUNG VON ELEKTRISCHEN GERÄTEN**

(71) Anmelder: Nexans, 75008 Paris (FR)
(72) Erfinder: Steinberg, Helmut, 92721 Störnstein (DE); Mayer, Udo, 92637 Weiden (DE)
(74) Vertreter: Feray, Valérie

(57) **Zusammenfassung**

Es wird eine Anordnung zur elektrischen Verbindung von zwei in einer Anlage befindlichen elektrischen Geräten (2, 3) angegeben, bei welcher zwischen den beiden elektrischen Geräten (2, 3) mindestens eine von einer Abschirmung umgebene elektrische Leitung (4) angeordnet ist. Die Abschirmung (5) ist als Metallrohr (5) ausgeführt, welches zumindest teilweise gewellt und an beiden Enden jeweils mit einem elektrisch leitfähigen Gehäuse der beiden elektrischen Geräte (2, 3) lückenlos verbunden ist.

## Beschreibung

Die Erfindung bezieht sich auf eine Anordnung zur elektrischen Verbindung von zwei in einer Anlage befindlichen elektrischen Geräten, bei welcher zwischen den beiden elektrischen Geräten mindestens eine von einer Abschirmung umgebene elektrische Leitung angeordnet ist.

Die elektrischen Leitungen bzw. Adern sind mit einer Isolierung umgebene elektrische Leiter. Die erwähnte Anordnung wird in elektrischen Geräten aller Art und insbesondere in Kraftfahrzeugen eingesetzt. Beispielsweise kann mit einer einzelnen elektrischen Leitung in einem Elektro-oder Hybridkraftfahrzeug die Gleichstrombatterie mit einem Wechselrichter elektrisch verbunden werden. Der Wechselrichter kann wiederum mit dem Elektromotor mittels eines Dreiphasensystems, d.h. mit drei elektrischen Leitungen, welche vorzugsweise zu einem Kabelsatz zusammengefaßt sind, verbunden werden. Auf diese Weise kann der Elektromotor von der Gleichstrombatterie über den Wechselrichter mit Wechselstrom versorgt werden.

In der Anlage, beispielsweise im Kraftfahrzeug, werden die elektrischen Leitungen während des Herstellungsprozesses mechanisch festgelegt. Beispielsweise können Einzel- bzw. mehrere Leitungen von einem flexiblen Kunststoffrohr umgeben sein. Mehrere, zu einem Kabelsatz zusammengefaßte Leitungen können auch von einem Schrumpfschlauch umschlossen oder mit Klebeband umwickelt sein. Solche Ummantelungen bieten allerdings keinen ausreichenden mechanischen Schutz der Leitung oder Leitungen bei größeren mechanischen Beanspruchungen, die beispielsweise durch Erschütterungen, kantige Gegenstände oder während der Installation der Leitungen auftreten können. Weiterhin weisen sie für einige Anwendungen nicht die vor allem für die Verwendung in einem Kraftfahrzeug geforderte Formsteifigkeit auf.

Die DE 30 42 177 A1 beschreibt einen Kabelbaum zur elektrisch leitenden Verbindung einer Stromquelle mit mehreren Stromverbrauchern in einem Gerät. Die in dem Kabelbaum enthaltenen elektrischen Leitungen sind zu einer mechanischen Einheit zusammengefaßt und in dem Bereich, in dem die Leitungen parallel sind, von einem gewellten Metallrohr umgeben. Das gewellte Metallrohr soll die Leiter gegen mechanische Belastung schützen und dem Kabelbaum eine gute Biegsamkeit verleihen.

Um die Einstrahlung und Abstrahlung unerwünschter elektromagnetischer Felder zu vermeiden bzw. zu verringern, wird die Leitung bzw. der Verbund der Leitungen mit einem Schirm bzw. einer Abschirmung versehen. Dieser Schirm kann beispielsweise aus einem Kupfergeflecht bestehen, welches um die Leitung bzw. den Leitungsverbund herumgeformt ist. Die elektrischen Leitungen selbst können auch bereits jeweils mit einem Schirm versehen sein.

Das in der oben erwähnten DE 30 42 177 A1 beschriebene Metallrohr ist für eine wirksame Abschirmung nicht geeignet. Da sich das Metallrohr nur über einen zentralen Bereich des Leitungsverbunds erstreckt, in dem die Leitungen parallel sind, verbleiben die Bereiche, in denen die Leitungen an die Verbraucher bzw. die Stromquelle angeschlossen werden, ungeschirmt.

Der Erfindung liegt die Aufgabe zugrunde, eine Anordnung zur elektrischen Verbindung zweier in einer Anlage befindlichen elektrischer Geräte bereitzustellen, sodaß eine komplette, lückenlose elektromagnetische Abschirmung der mindestens einen elektrischen Leitung und der daran angeschlossenen elektrischen Komponenten gewährleistet ist, und wobei die mindestens eine elektrische Leitung geometrisch feststellbar ist.

Diese Aufgabe wird gemäß der Erfindung dadurch gelöst, daß die oben erwähnte Abschirmung als Metallrohr ausgeführt ist, welches zumindest teilweise gewellt und an beiden Enden jeweils mit einem elektrisch leitfähigen Gehäuse der beiden elektrischen Geräte lückenlos verbunden ist.

Das zumindest teilweise gewellte Metallrohr dient als rundum geschlossener elektrischer Schirm für die darin enthaltene mindestens eine elektrische Leitung. Die erfindungsgemäße Anordnung erlaubt somit eine komplette, lückenlose elektromagnetische Abschirmung der Verbindung zweier elektrischer Geräte, welche sich über die elektrische(n) Leitung(en) sowie die damit miteinander verbundenen elektrischen Geräte erstreckt. Dadurch ist die elektromagnetische Verträglichkeit der Anordnung mitsamt den elektrischen Geräten innerhalb der Anlage durchgehend gewährleistet.

Durch das Metallrohr ist die Verbindung zwischen den elektrischen Geräten innerhalb der Anlage vor mechanischen Belastungen während des Betriebs der Anlage, beispielsweise Schwingungen oder Erschütterungen, und vor mechanischen Belastungen während der Herstellung der Anlage, beispielsweise Druck, zuverlässig und dauerhaft geschützt.

Gleichzeitig wird die Verbindung der elektrischen Geräte durch die erfindungsgemäße Anordnung mechanisch festgelegt. Durch die Wellung des Metallrohrs kann die Anordnung in gewünschter Weise geformt, d.h. mit definierten Biegeradien versehen, und in die Anlage, beispielsweise in einem Kraftfahrzeug, eingebaut werden. Die physikalischen Eigenschaften der Anordnung bei Biegung sind dadurch vorgegeben. Die Wellung des Metallrohrs sorgt ebenfalls dafür, daß Schwingungen in der Anlage, beispielsweise die des Elektromotors in einem Kraftfahrzeug, aufgenommen werden können und die Anordnung nicht beeinträchtigen.

Die erfindungsgemäße Anordnung wird in einer besonders bevorzugten Ausführungsform im Automobilbau eingesetzt, und zwar für elektrisch leitende Verbindungen innerhalb eines Kraftfahrzeugs. Beispielsweise erlaubt die Anordnung die geschirmte und mechanisch stabile Verbindung von einem Elektromotor im vorderen Fahrzeugbereich mit einem Wechselrichter, welcher sich zusammen mit einer Gleichstrombatterie im Kofferraum des Fahrzeugs befindet. Die erfindungsgemäße Anordnung stellt hier zusätzlich insbesondere einen Bißschutz der Verbindung gegenüber Nagetieren dar, wodurch die Betriebssicherheit des Fahrzeugs erhöht wird.

Ausführungsbeispiele des Erfindungsgegenstands sind in den Zeichnungen dargestellt. Es zeigen:
Fig. 1 schematisch ein Ausführungsbeispiel einer erfindungsgemäßen Anordnung zur elektrischen Verbindung von zwei elektrischen Geräten und
Fig. 2 schematisch ein Beispiel einer Verbindung zwischen der erfindungsgemäßen Anordnung und einem Kupplungselement.

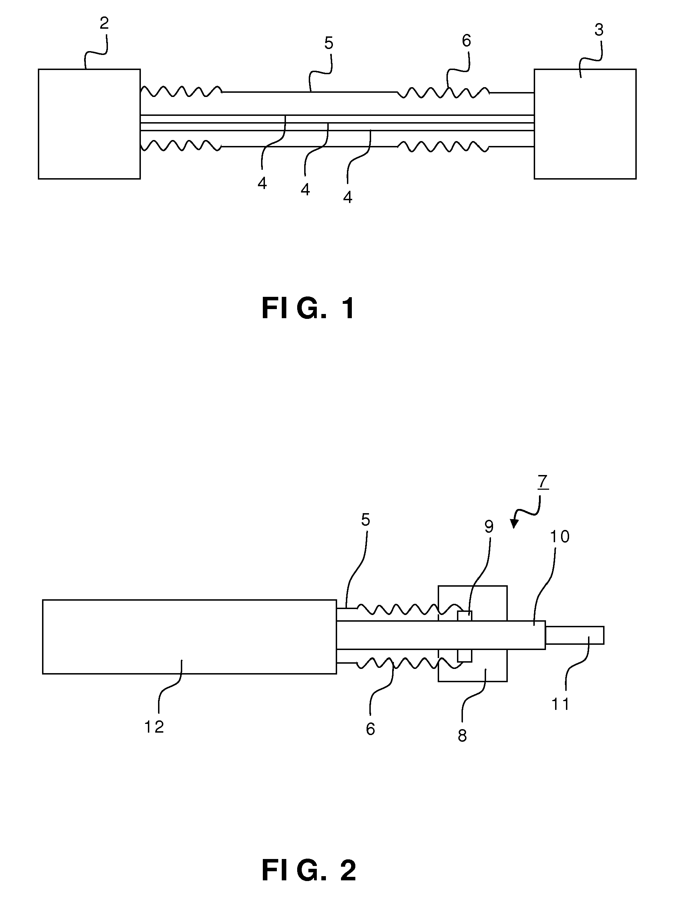

Die Fig. 1 zeigt ein Ausführungsbeispiel einer erfindungsgemäßen Anordnung. Zwischen zwei elektrischen Geräten 2, 3 sind drei elektrische Leitungen 4 angeordnet. Die Anordnung und die elektrischen Geräte 2, 3 sind in Fig. 1 nur in ihrem grundsätzlichen Aufbau dargestellt, ohne Darstellung von Anschlüssen der Enden der Leitungen 4 an die Geräte 2, 3. Jede Leitung 4 besteht aus einem von einer Isolierung umgebenen elektrischen Leiter. Die Leitungen sind weiterhin von einer Abschirmung 5 umgeben. Die elektrischen Geräte 2, 3 haben jeweils ein elektrisch leitfähiges Gehäuse. Die Gehäuse können beispielsweise aus Metall sein.

Bei den elektrischen Geräten 2, 3 kann es sich beispielsweise um einen Wechselrichter und einen Elektromotor bzw. um eine Gleichstrombatterie und einen Wechselrichter in einem Elektro- oder Hybridkraftfahrzeug handeln. Wechselrichter und Elektromotor können beispielsweise mittels eines zu einem Kabelsatz zusammengefaßten Dreiphasensystems miteinander verbunden sein, wie in Fig. 1 angedeutet. Batterie und Wechselrichter können beispielsweise durch eine zweiadrige elektrische Leitung miteinander verbunden sein.

Die Abschirmung 5 ist als Metallrohr 5 ausgeführt. Das Metallrohr 5 umgibt die elektrischen Leitungen 4 vollständig und dient als rundum geschlossener elektrischer Schirm derselben. An seinen beiden Enden ist das Metallrohr 5 jeweils mit den metallischen Gehäusen der elektrischen Geräte 2, 3 lückenlos verbunden. Die metallischen Gehäuse sowie das Metallrohr 5 bilden somit einen Gesamtschirm, welcher die elektromagnetische Verträglichkeit der Verbindung zwischen den elektrischen Geräten 2, 3 garantiert.

Das Metallrohr 5 ist zumindest teilweise mit einer Wellung 6 versehen. Durch die Wellung 6 wird sichergestellt, daß das Metallrohr 5 an den gewünschten Stellen genügend biegbar ist, um den Vorgaben und Gegebenheiten entsprechend in der Anlage eingebaut werden zu können, und um Schwingungen aufnehmen zu können, ohne die mechanische Festigkeit der Anordnung zu beeinträchtigen. Für den Einbau in einem Kraftfahrzeug muß die Anordnung beispielsweise dreidimensional bieg- und formbar sein. Das Metallrohr kann auch komplett gewellt sein, wodurch ein flexibler Einsatz der Anordnung gewährleistet ist. Die Wellung 6 kann spiral- oder ringförmig ausgeführt sein.

Mit besonderem Vorteil ist das Metallrohr 5 von einer Isolierschicht aus Kunststoff umgeben (siehe Bezugszeichen 12 in Fig. 2), um dessen elektrische Isolation nach außen zu gewährleisten. Das Rohr 5 kann beispielsweise aus Kupfer oder aus Aluminium bestehen. Das Metallrohr 5 kann auch selbst, zusätzlich zu den elektrischen Leitungen 4, als elektrischer Leiter dienen.

Nach einer bevorzugten Ausführungsform ist an den Enden der elektrischen Leitungen 4 jeweils ein Kupplungselement angebracht. Das Kupplungselement ist beispielsweise ein Stecker oder eine Buchse. Das Kupplungselement ist ebenfalls mit einer leitfähigen Abschirmung versehen. Die Abschirmung besteht beispielsweise aus einem metallischen Gehäuse des Kupplungselements.

In Fig. 2 ist ein Ausführungsbeispiel einer mit einem Stecker 7 verbundenen erfindungsgemäßen Anordnung gezeigt. Der Übersichtlichkeit halber ist in Fig. 2 nur ein von einer Isolierung 10 umgebener elektrischer Leiter 11 dargestellt. Der Stecker 7 weist ein leitfähiges Gehäuse 8 auf. Das teilweise gewellte und von einer Isolierung 12 umgebene Abschirmungsrohr 5 ist lückenlos mit dem leitfähigen, beispielsweise metallischen, Gehäuse 8 verbunden. Dies ist durch das Bezugszeichen 9 angedeutet. Die Verbindung kann beispielsweise durch Schweißen oder durch Klemmen erfolgen, je nachdem, ob eine stoffschlüssige oder eine lösbare Verbindung erforderlich bzw. gewünscht ist. Das Steckergehäuse 8 wiederum ist lückenlos mit dem metallischen Gehäuse eines der elektrischen Geräte verbindbar. Dadurch ist eine einwandfreie Abschirmung der Verbindung zwischen den elektrischen Geräten 2, 3 gewährleistet.

Alternativ kann das Metallrohr 5 auch direkt mit den elektrisch leitfähigen Gehäusen der elektrischen Geräte 2, 3 stoffschlüssig oder lösbar verbunden sein.

Die erfindungsgemäße Anordnung kann zusätzlich zu den stromversorgenden Leitungen 4 auch mindestens eine optische Datenleitung (nicht dargestellt) aufweisen. Diese Datenleitung kann beispielsweise zur Übertragung von Signalen dienen, wie sie bei der Erfassung von Motordrehzahlen und anderen Kenndaten des Elektromotors anfallen. Die innerhalb des Metallrohrs 5 geführte optische Datenleitung ist somit vor mechanischen Belastungen geschützt.

Das Metallrohr 5 wird auf die mindestens eine elektrische Leitung 4 nach bekannten Herstellungsverfahren aufgebracht. Beispielsweise wird um die fertiggestellte Leitung 4 kontinuierlich ein Metallband herumgeformt und danach an seinen Längskanten verschweißt. Anschließend wird das so geformte Rohr nach gewünschter Geometrie partiell oder komplett gewellt.

Der Durchmesser des Metallrohrs 5 wird vorzugsweise so gewählt, daß die Leitung 4 oder die Leitungen 4 in dem Metallrohr 5 festliegen. Alternativ kann ein vorhandener Zwischenraum zwischen der mindestens einen elektrischen Leitung 4 und dem Metallrohr 5 auch mit einem Füllmaterial ausgefüllt sein. Dadurch ist die Anordnung insgesamt besser gegen mechanische Belastungen geschützt, wie beispielsweise durch den Betrieb des Kraftfahrzeugs bedingte Schwingungen und Erschütterungen. Ein geeignetes Füllmaterial ist beispielsweise ein aufgeschäumtes Isoliermaterial, wie Industrieschaum. Beispielsweise kann der Leitungsverbund oder die einzelne Leitung 4 mit einem solchen Material umschäumt werden, bevor das Metallrohr 5 wie oben beschrieben aufgebracht wird.

## Patentansprüche

1. Anordnung zur elektrischen Verbindung von zwei in einer Anlage befindlichen elektrischen Geräten (2, 3), bei welcher zwischen den beiden elektrischen Geräten (2, 3) mindestens eine von einer Abschirmung umgebene elektrische Leitung (4) angeordnet ist, **dadurch gekennzeichnet, daß** die Abschirmung als Metallrohr (5) ausgeführt ist, welches zumindest teilweise gewellt und an beiden Enden jeweils mit einem elektrisch leitfähigen Gehäuse der beiden elektrischen Geräte (2, 3) lückenlos verbunden ist.

2. Anordnung nach Anspruch 1, **dadurch gekennzeichnet, daß** an den Enden der mindestens einen elektrischen Leitung (4) jeweils ein mit einer Abschirmung (8) versehenes Kupplungselement (7) angebracht ist, wobei das Metallrohr (5) an beiden Enden jeweils mit einer der Abschirmungen (8) der Kupplungselemente (7) verbunden ist, und wobei die Abschirmungen (8) der Kupplungselemente (7) jeweils mit dem elektrisch leitfähigen Gehäuse eines der elektrischen Geräte (2, 3) lückenlos verbunden ist.

3. Anordnung nach Anspruch 2, **dadurch gekennzeichnet, daß** die Abschirmungen (8) der Kupplungselemente (7) mit den Enden des Metallrohrs (5) stoffschlüssig verbunden sind.

4. Anordnung nach Anspruch 2, **dadurch gekennzeichnet, daß** die Abschirmungen (8) der Kupplungselemente (7) mit den Enden des Metallrohrs (5) verklemmt sind.

5. Anordnung nach einem der Ansprüche 2 bis 4, **dadurch gekennzeichnet, daß** die Kupplungselemente (7) Stecker oder Buchsen sind.

6. Anordnung nach einem der vorangehenden Ansprüche, **dadurch gekennzeichnet, daß** sie zusätzlich mindestens eine Sensorleitung aufweist.

7. Anordnung nach Anspruch 6, **dadurch gekennzeichnet, daß** die Sensorleitung eine optische Leitung ist.

8. Anordnung nach einem der vorangehenden Ansprüche, **dadurch gekennzeichnet, daß** der Zwischenraum zwischen der mindestens einen elektrischen Leitung (4) und dem Metallrohr (5) mit einem Füllmaterial ausgefüllt ist.

9. Anordnung nach Anspruch 8, **dadurch gekennzeichnet, daß** das Füllmaterial ein Industrieschaum ist.

10. Anordnung nach einem der vorangehenden Ansprüche, **dadurch gekennzeichnet, daß** die Wellung (6) des Metallrohrs (5) spiral- oder ringförmig ist.

11. Anordnung nach einem der vorangehenden Ansprüche, **dadurch gekennzeichnet, daß** das Metallrohr (5) von einer Isolierschicht (12) aus Kunststoff umgeben ist.

12. Verwendung einer Anordnung gemäß einem der Ansprüche 1 bis 11 für elektrisch leitende Verbindungen innerhalb eines Kraftfahrzeugs.

## Geänderte Patentansprüche

### Geänderte Patentansprüche gemäss Regel 137(2) EPÜ.

1. Anordnung zur elektrischen Verbindung von zwei in einer Anlage befindlichen elektrischen Geräten (2,3), bei welcher zwischen den beiden elektrischen Geräten (2,3) mindestens eine von einer aus Metall bestehenden, als rohrförmig geschlossene und flexible Hülle ausgeführten Abschirmung umgebene elektrische Leitung (4) angeordnet ist und bei welcher die Abschirmung an beiden Enden jeweils mit einem elektrisch leitfähigen Gehäuse der beiden elektrischen Geräte (2,3) lückenlos verbunden ist, **dadurch gekennzeichnet,**
- **daß** die Abschirmung als zumindest teilweise gewelltes Metallrohr (5) ausgebildet ist, das aus einem kontinuierlich um die eine elektrische Leitung (4) herumgeformten Metallband geformt ist, dessen Längskanten miteinander verschweißt sind und das partiell oder komplett gewellt ist, und
- **daß** der Zwischenraum zwischen der mindestens einen elektrischen Leitung (4) und dem Metallrohr (5) mit einem Füllmaterial ausgefüllt ist.

2. Anordnung nach Anspruch 1, **dadurch gekennzeichnet, daß** das Füllmaterial ein Industrieschaum ist.

3. Anordnung nach Anspruch 2, **dadurch gekennzeichnet, daß** der im Metallrohr (5) angeordnete Leitungsverbund durch das Füllmaterial umschäumt ist.

4. Anordnung nach Anspruch 1, **dadurch gekennzeichnet, daß** das Metallrohr (5) von einer Isolierschicht (12) aus Kunststoff umgeben ist.

5. Anordnung nach Anspruch 1, **dadurch gekennzeichnet, daß** an den Enden der mindestens einen elektrischen Leitung (4) jeweils ein mit einer Abschirmung (8) versehenes Kupplungselement (7) angebracht ist, wobei das Metallrohr (5) an beiden Enden jeweils mit einer der Abschirmungen (8) der Kupplungselemente (7) verbunden ist, und wobei die Abschirmungen (8) der Kupplungselemente (7) jeweils mit dem elektrisch leitfähigen Gehäuse eines der elektrischen Geräte (2,3) lückenlos verbunden ist.

6. Anordnung nach Anspruch 5, **dadurch gekennzeichnet, daß** die Abschirmungen (8) der Kupplungselemente (7) mit den Enden des Metallrohrs (5) stoffschlüssig verbunden sind.

7. Anordnung nach Anspruch 5, **dadurch gekennzeichnet, daß** die Abschirmungen (8) der Kupplungselemente (7) mit den Enden des Metallrohrs (5) verklemmt sind.

8. Anordnung nach einem der Ansprüche 5 bis 7, **dadurch gekennzeichnet, daß** die Kupplungselemente (7) Stecker oder Buchsen sind.

9. Verwendung einer Anordnung gemäß einem der Ansprüche 1 bis 8 für elektrisch leitende Verbindungen innerhalb eines Kraftfahrzeugs.
